# EUROPÄISCHE PATENTSCHRIFT

(11) **EP 4 517 139 B1**
(45) Veröffentlichungstag und Bekanntmachung des Hinweises auf die Patenterteilung: **06.08.2025**
(21) Anmeldenummer: 24194028.7
(22) Anmeldetag: 12.08.2024
(51) Int. Cl.: F16J 15/34

(54) **VERTIKAL ANGEORDNETE GLEITRINGDICHTUNGSANORDNUNG**
VERTICALLY ARRANGED SLIDE RING SEAL ARRANGEMENT
ENSEMBLE JOINT D'ÉTANCHÉITÉ À BAGUE DE GLISSEMENT DISPOSÉ VERTICALEMENT

(30) Priorität: 31.08.2023 DE 102023123435
(43) Veröffentlichungstag der Anmeldung: 05.03.2025
(73) Patentinhaber: EagleBurgmann Germany GmbH & Co. KG, 82515 Wolfratshausen (DE)
(72) Erfinder: BAUR, Linus, 81379 München (DE); GRÖLL, Andreas, 82335 Berg (DE); RIES, Wolfgang, 82433 Bad Kohlgrub (DE); SEEBER, Jonathan, 82223 Eichenau (DE)
(74) Vertreter: Hoefer & Partner Patentanwälte mbB

(56) Entgegenhaltungen:
- CN-A- 108 747 827
- CN-A- 111 237 470
- CN-A- 112 728 086
- CN-A- 115 264 073
- US-A1- 2020 300 369

## Beschreibung

Die vorliegende Erfindung betrifft eine vertikal angeordnete Gleitringdichtungsanordnung, insbesondere eine Rührwerksdichtung, welche an einem rotierenden Bauteil angeordnet ist, um einen ersten Bereich von einem zweiten Bereich abzudichten.

Vertikal angeordnete Gleitringdichtungsanordnungen werden beispielsweise bei Rührwerksdichtungen verwendet. Derartige Rührwerksdichtungen müssen unterschiedlichste Anwendungsfälle abdecken, insbesondere Abdichtung gegen mit Feststoffen belastete Medien, hohen Temperaturen und variierenden Drehzahlen. Hierdurch können sich verschiedenste Probleme für die Gleitringdichtungsanordnung im Betrieb ergeben. Ein weiterer Punkt bei Gleitringdichtungsanordnungen für Rührwerke liegt in einer Sterilisierbarkeit. Hierbei muss höchste Sorgfalt während des Sterilisationsvorgangs angewandt werden. Insbesondere Bauteile von Gleitringdichtungsanordnungen können hier Probleme bereiten, da manchmal bauteilbedingt und aufgrund der vertikalen Anordnung der Gleitringdichtungsanordnung Bereiche vorkommen können, in welchen stehendes Medium vorliegt, welches nicht oder nur schwierig ausspülbar ist.

Es ist daher Aufgabe der vorliegenden Erfindung, eine vertikal angeordnete Gleitringdichtungsanordnung und eine Rührwerksdichtung bereitzustellen, welche bei einfachem Aufbau und einfacher, kostengünstiger Herstellbarkeit eine sichere Sterilisation ermöglicht und keine Bereiche mit stehendem Medium aufweist.

Diese Aufgabe wird durch eine Gleitringdichtungsanordnung mit den Merkmalen den Anspruchs 1 und eine Rührwerksdichtung mit den Merkmalen des Anspruchs 10 gelöst. Die Unteransprüche zeigen bevorzugte Weiterbildungen der Erfindung.

Die erfindungsgemäß vertikal angeordnete Gleitringdichtungsanordnung, insbesondere Rührwerksdichtung, mit den Merkmalen des Anspruchs 1 weist demgegenüber den Vorteil auf, dass eine sichere und einfache Sterilisation der Gleitringdichtungsanordnung und deren Bauteile möglich ist. Weiterhin kann auch im Betrieb eine reduzierte thermische Belastung der Gleitringdichtungsanordnung erreicht werden, da eine kontinuierliche Umspülung ohne stehende Medienbereiche möglich ist. Ferner kann auch eine verbesserte mechanische Belastung von Bauteilen der Gleitringdichtungsanordnung erreicht werden, welche insbesondere bei feststoffbeladenen Medien sehr groß ist und möglicherweise zu Beschädigungen und somit einem Ausfall der Gleitringdichtungsanordnung führen können. Auch kann ein Fluidstrom um die Gleitringdichtungsanordnung hinsichtlich Turbulenzen und Reibungsverlusten optimiert werden.

Dies wird erfindungsgemäß dadurch erreicht, dass die vertikal angeordnete Gleitringdichtungsanordnung eine Gleitringdichtung mit einem rotierenden und einem stationären Gleitring aufweist. Der rotierende Gleitring weist eine erste Gleitfläche auf und der stationäre Gleitring weist eine zweite Gleitfläche auf, wobei zwischen dem Gleitring ein Dichtspalt definiert ist. Die Gleitringdichtungsanordnung umfasst ferner ein Federelement für eine axiale Vorspannung der Gleitringdichtung. Darüber hinaus ist ein Mitnehmer vorgesehen, welcher eingerichtet ist, eine Drehmomentübertragung von einem rotierenden Bauteil, beispielsweise einer Welle oder einer Wellenhülse, auf den rotierenden Gleitring vorzunehmen. Das Federelement ist vollständig in einem Innenbereich des Mitnehmers angeordnet und zwischen dem Mitnehmer und einer Rückseite des rotierenden Gleitrings angeordnet. Der Mitnehmer weist ein hohlzylindrisches Gehäuse mit einem, insbesondere radial, nach innen gerichteten Innenflansch auf. Der Innenflansch ist eingerichtet zur Abstützung des Federelements in axialer Richtung der Gleitringdichtung, so dass das Federelement am Innenflansch anliegt. Das Federelement ist somit zwischen dem Innenflansch und der Rückseite des rotierenden Gleitrings zur axialen Vorspannung positioniert. Weiterhin weist das Gehäuse wenigstens eine Fensteraussparung auf, sodass ein sich in Umfangsrichtung erstreckender, bogenförmiger Bund gebildet ist. In diesem Bund ist wenigstens eine den Bund unterbrechende Nut ausgebildet, welche eine Nuttiefe aufweist, die bis zur Fläche des Innenflansches des Gehäuses des Mitnehmers reicht. Dadurch wird ein Abströmpfad für Flüssigkeiten aus dem Innenbereich des Mitnehmers ermöglicht. Der Abströmpfad stellt somit eine Verbindung zwischen dem Innenbereich des Mitnehmers und einem Außenbereich des Mitnehmers bereit, sodass Medium, welches sich im Innenbereich des Mitnehmers befindet, über die Nut vollständig zur Außenseite abgeführt werden kann. Dadurch wird sicher verhindert, dass sich stehendes Medium im Innenbereich des Mitnehmers sammelt. Somit kann auch im Betrieb eine kontinuierliche Spülung im Innenbereich des Mitnehmers ermöglicht werden, sodass beispielsweise feststoffbeladene Medien sicher aus dem Innenbereich ausgespült werden. Hierdurch ergibt sich zusätzlich auch eine verbesserte Wärmeabfuhr aus der Gleitringdichtung. Auch wird im Betrieb, in welchem Federbewegungen durch Axialverschiebung beispielweise am rotierenden Bauteil vorkommen können, eine Funktion des Federelements durch feststoffbeladene Medien nicht behindert.

Vorzugsweise ist die Nut im Bund des Mitnehmers in einem Eckbereich zwischen dem Bund und dem restlichen Gehäuse des Mitnehmers vorgesehen. Dadurch kann eine Spannungsreduktion im Mitnehmer an diesem Eckbereich ermöglicht werden. Der Mitnehmer kann im Betrieb auf Torsion belastet werden, wobei die Nut eine Kerbwirkung und übermäßige Belastung des Eckbereichs verhindert.

Vorzugsweise weist der Bund zwei Eckbereiche zum Gehäuse des Mitnehmers auf, wobei in jedem Eckbereich der Fensteraussparung am Bund eine Nut angeordnet ist.

Für eine besonders gute Durchspülung und Kühlung der Gleitringdichtung weist der Mitnehmer vorzugsweise zwei Fensteraussparungen auf, wobei an jedem Eckbereich jeder Fensteraussparung am Bund eine Nut angeordnet ist. Somit sind insgesamt vier Nuten im Mitnehmer vorgesehen.

Die Nut weist weiter bevorzugt einen Nutanfang auf, der in einer Auflagefläche des Innenflansches liegt. Somit weist die Nut einen Teilnutbereich auf, welcher zumindest teilweise auch im nach innen gerichteten Innenflansch des Mitnehmers ausgebildet ist. Hierdurch kann insbesondere ermöglicht werden, dass das Federelement einen Teilbereich aufweist, welcher formschlüssig in der Nut angeordnet ist, sodass eine Relativbewegung zwischen dem Federelement und dem Mitnehmerelement insbesondere in Umfangsrichtung, verhindert werden kann. Dadurch wird eine Funktion des Federelements in jedem Betriebszustand sichergestellt werden und kann nicht beispielsweise durch eine Torsion oder Relativverschiebung zwischen Federelement und Mitnehmer beeinträchtigt sein.

Weiter bevorzugt ist die Nut derart ausgebildet, dass am Innenflansch ein durchgehender ringförmiger Bereich für das Federelement vorhanden ist. Der durchgehende Bereich erstreckt sich dabei von einem radialen inneren Rand bis zum Nutanfang.

Die Nut ist vorzugsweise in einem spitzen Winkel zu einer Ebene, in welcher der Innenflansch liegt, angeordnet. Der spitze Winkel beträgt vorzugsweise 10 bis 20 Grad. Die Ebene des Innenflansches ist dabei vorzugsweise senkrecht zur Axialrichtung der Gleitringdichtungsanordnung.

Weiter bevorzugt ist ein Querschnitt der Nut U-förmig. Hierdurch können Strömungsvorteile beim Abströmen von Medium aus dem Innenbereich des Mitnehmers realisiert werden.

Das Federelement ist vorzugsweise eine Einzelfeder, d.h. ein einziges Federelement, insbesondere ein ringförmiges Federelement, z.B. eine oder mehrere Tellerfedern oder eine Wellfeder, insbesondere eine Multi-Wellfeder mit einer Vielzahl von Wellfederelementen, welche wabenförmig miteinander verbunden sind, sodass ein hohlzylindrischer Federkörper gebildet wird.

Der Mitnehmer der Gleitringdichtungsanordnung ist vorzugsweise ein metallisches Gussteil. Die Erfindung betrifft auch eine Rührwerksdichtung für ein Rührwerk mit einer vertikal angeordneten Gleitringdichtungsanordnung. Vorzugsweise ist im Rührwerk eine Tandemdichtung vorgesehen, wobei zwei Gleitringdichtungsanordnungen in Reihe an einer Welle angeordnet sind.

Die US 2020/300 369 A1 offenbart eine Gleitringdichtungsanordnung nach dem Oberbegriff des Anspruchs 1.

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Schnittansicht einer vertikal angeordneten Gleitringdichtungsanordnung gemäß einem bevorzugten Ausführungsbeispiel der Erfindung,
- Figur 2: eine perspektivische Ansicht eines Mitnehmers der Gleitringdichtungsanordnung von Figur 1, und
- Figur 3: eine schematische Draufsicht auf den Mitnehmer von Figur 2.

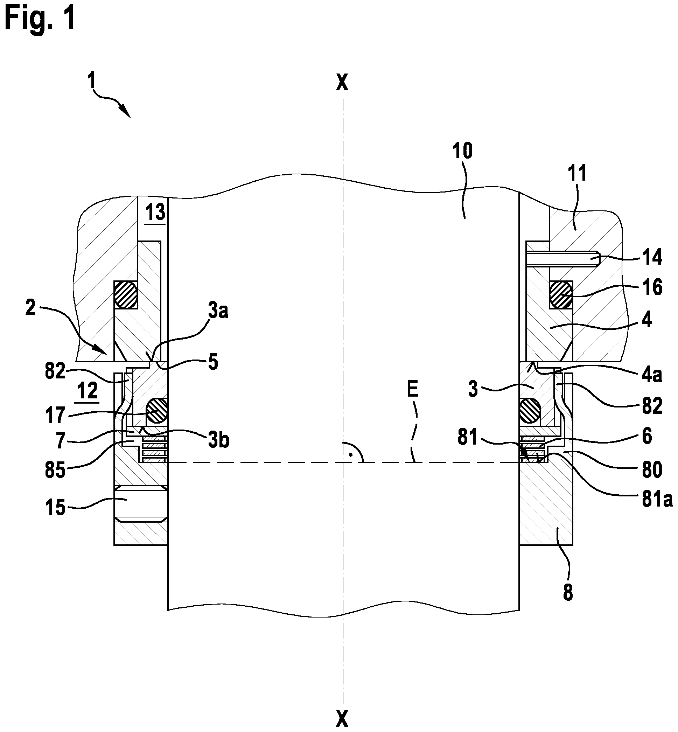

Nachfolgend wird unter Bezugnahme auf die Figuren 1 bis 3 eine Gleitringdichtungsanordnung 1 der Erfindung im Detail beschrieben.

Die Gleitringdichtungsanordnung 1 ist vertikal angeordnet und als Rührwerksdichtung ausgebildet.

Die Gleitringdichtungsanordnung 1 umfasst eine Gleitringdichtung 2 mit einem rotierenden Gleitring 3 und einem stationären Gleitring 4. Der rotierende Gleitring 3 weist eine erste Gleitfläche 3a und eine Rückseite 3b auf. Der stationäre Gleitring 4 weist eine zweite Gleitfläche 4a auf. Zwischen der ersten Gleitfläche 3a und der zweiten Gleitfläche 4a ist ein Dichtspalt 5 definiert.

Wie weiter aus Figur 1 ersichtlich ist, ist der rotierende Gleitring 3 mittels eines Federelements 6 in Axialrichtung X-X der Gleitringdichtungsanordnung 1 vorgespannt.

Die Gleitringdichtung 2 dichtet dabei einen ersten Bereich 12 gegenüber einem zweiten Bereich 13 an einer Welle 10 oder einem anderen rotierenden Bauteil ab.

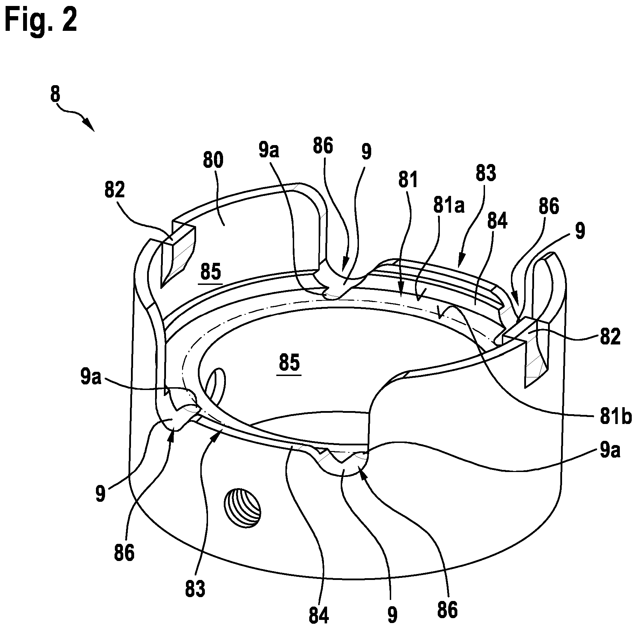

Zur Drehmomentübertragung von der Welle 10 auf den rotierenden Gleitring 3 ist ein Mitnehmer 8 vorgesehen. Der Mitnehmer 8 ist ein im Wesentlichen hohlzylindrisches Bauteil mit einem Mitnehmergehäuse 80, an welchem zwei Nasen 82 zur Drehmomentübertragung vom Mitnehmer auf den rotierenden Gleitring ausgebildet sind. Die Nasen sind insbesondere in Figur 2 ersichtlich. Die Nasen 82 sind radial nach innen vorstehende Laschen, welche in entsprechende Ausnehmungen im rotierenden Gleitring 3 eingreifen.

Der Mitnehmer 8 ist mittels Gewindestiften 15 an einem Basisbereich mit der Welle 10 fest verbunden. Damit kann bei rotierender Welle 10 ein Drehmoment der Welle 10 über den Mitnehmer 8 auf den rotierenden Gleitring 3 übertragen werden.

Der stationäre Gleitring 4 ist an einem Gehäuse 11 fixiert.

Insbesondere in Figur 2 gezeigt, weist der Mitnehmer 8 ferner einen radial nach innen gerichteten Innenflansch 81 auf. Der Innenflansch 81 liegt dabei in einer Ebene E senkrecht zur Axialrichtung X-X (vgl. Figur 1).

Der Innenflansch 81 weist eine Auflagefläche 81a auf, welche zur Auflage und Abstützung des Federelements 6 dient.

Somit kann das Federelement 6 in einem Innenbereich 85 des Mitnehmers 8 angeordnet werden.

Das Mitnehmergehäuse 80 weist ferner zwei einander gegenüberliegende Fensteraussparungen 83 auf. Die Fensteraussparungen 83 bilden offene Aussparungen im Mitnehmergehäuse 80.

Wie weiter aus Figur 2 ersichtlich ist, sind die Fensteraussparungen 83 derart ausgebildet, dass diese in Axialrichtung des Mitnehmers 8 nicht bis zur Auflagefläche 81a des Innenflansches 81 reichen. Dadurch ergibt sich an beiden Fensteraussparungen 83 jeweils ein bogenförmiger Bund 84. Der Bund 84 ist jeweils über ca. ein Viertel des Umfangs ausgebildet.

Hierbei sind an allen Eckbereichen 86 der Fensteraussparungen 83 am Bund 84 jeweils Nuten 9 ausgebildet. Die Nuten 9 weisen einen U-förmigen Querschnitt auf. Somit weist der Mitnehmer 8 insgesamt vier Nuten 9 auf.

Die Nuten 9 durchbrechen dabei das Mitnehmergehäuse 80. Wie weiter aus Figur 2 ersichtlich ist, beginnen die Nuten 9 jeweils ungefähr mittig an der Auflagefläche 81a. Dadurch verbleibt ein nutfreier, ringförmiger Bereich 81b an der Auflagefläche 81a des Innenflansches 81, wodurch in Umfangsrichtung eine ringförmig ununterbrochene Abstützfläche für das Federelement 6 verbleibt. Ein Nutanfang 9a ist somit von einem inneren Rand des Innenflansches 81 beabstandet.

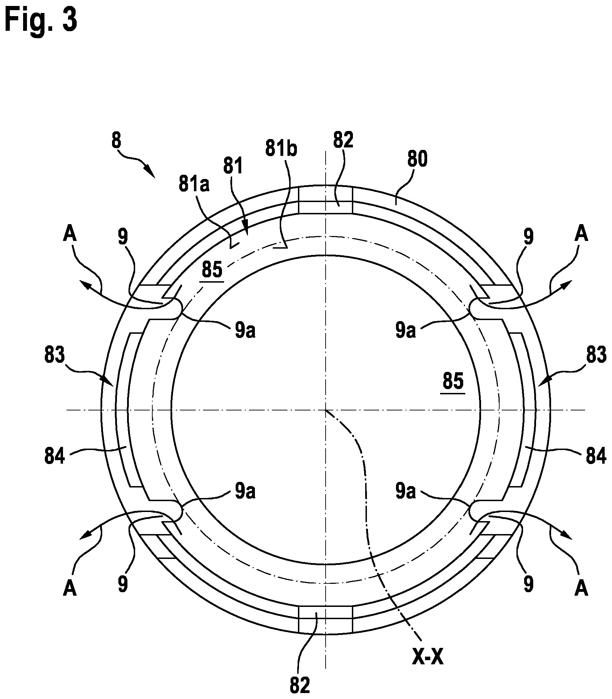

Weiterhin sind die Nuten 9 vorzugsweise in einem kleinen, spitzen Winkel, vorzugsweise ca. 10 Grad, zur Auflagefläche 81a des Innenflansches 81 ausgebildet. Hierdurch wird eine Abströmung von Flüssigkeit aus dem Innenbereich 85 über die Nuten 9 zur Außenseite des Mitnehmers 8 verbessert. Dies ist schematisch in Figur 3 durch die Pfeile A angedeutet.

Der stationäre Gleitring 4 ist mittels eines Stiftes 14 drehfest mit dem Gehäuse 11 verbunden, um insbesondere beim Anfahren der Gleitringdichtungsanordnung ein unerwünschtes Mitdrehen des stationären Gleitrings 4 mit dem rotierenden Gleitring 3 zu vermeiden.

Weiterhin ist am stationären Gleitring 4 eine erste Nebendichtung 16 in Form eines O-Rings zur Abdichtung zum Gehäuse 11 angeordnet. Am rotierenden Gleitring 3 ist ferner eine zweite Nebendichtung 17 zur Abdichtung zur Welle 10 angeordnet. Die beiden Nebendichtungen sind vorzugsweise O-Ringe.

Wie weiter aus Figur 1 ersichtlich ist, ist zwischen dem Federelement 6 und der Rückseite 3b des rotierenden Gleitrings 3 eine Druckscheibe 7 vorgesehen.

Die Anordnung der Bauteile der vertikal angeordneten Gleitringdichtungsanordnung ist dabei der Art, dass in Vertikalrichtung von unten nach oben zuerst der Mitnehmer 8, dann das Federelement 6, dann der rotierende Gleitring 3 und dann der stationäre Gleitring 4 angeordnet sind. Durch die Anordnung der Nuten 9 im Mitnehmer 8 kann somit eine Flüssigkeit vom Innenbereich 85 des Mitnehmers 8 zur Außenseite des Mitnehmers 8 abströmen. Die Nuten 9 verhindern somit, dass sich stehende Flüssigkeit im Bereich des Innenflansches 81 des Mitnehmers 8 befindet. Hierdurch werden Ablagerungen, insbesondere bei mit Feststoffen beladenen Medien, in diesem Bereich vermieden. Dadurch wird sichergestellt, dass das Federelement 6 nicht durch derartige Ablagerungen in seiner Funktion beeinträchtigt wird.

Weiterhin ermöglichen die Nuten 9 bei Anwendungen, in denen eine Sterilisation der Bauteile der Gleitringdichtungsanordnung notwendig ist, eine vollständige Sterilisation auch des Innenbereichs 85 des Mitnehmers 8. Ohne die Nuten 9 würde die Gefahr bestehen, dass durch stehendes Medium im Bereich des Innenflansches 81 in diesem Bereich keine Sterilisation erfolgt, sodass in einer nachfolgenden Anwendung beispielsweise eines Rührwerks, dann eine unerwünschte Kontamination oder dergleichen bei der nachfolgenden Anwendung auftreten könnte.

Weiterhin stellen die Nuten 9 im Mitnehmergehäuse 80 sicher, dass auch im Betrieb kontinuierlich eine vollständige Durchspülung des Mitnehmers möglich ist. Hierdurch wird zusätzlich eine verbesserte Wärmeabfuhr erreicht, sodass temperaturbedingte Probleme im Betrieb der Gleitringdichtungsanordnung vermieden werden können.

Ein weiterer positiver Aspekt der Nuten 9 ergibt sich durch eine Reduktion von Spannungen in den Eckbereichen 86 der Fensteraussparung 83, wodurch mögliche Risse oder anderweitige Beschädigungen des Mitnehmers 8 vermieden werden können.

Die Nuten 9 stellen ferner sicher, dass eine Optimierung eines Fluidstroms durch und um die Gleitringdichtung 2 im Betrieb, insbesondere hinsichtlich Turbulenzen und Reibungsverlusten, möglich ist sowie mögliche Schäden durch Trockenlauf oder dergleichen vermieden werden können.

Neben der vorstehenden schriftlichen Beschreibung der Erfindung wird zu deren ergänzender Offenbarung hiermit explizit auf die zeichnerische Darstellung der Erfindung in den Figuren 1 bis 3 Bezug genommen.

### Bezugszeichenliste

- 1: Gleitringdichtungsanordnung/Rührwerksdichtung
- 2: Gleitringdichtung
- 3: rotierender Gleitring
- 3a: erste Gleitfläche
- 3b: Rückseite
- 4: stationärer Gleitring
- 4a: zweite Gleitfläche
- 5: Dichtspalt
- 6: Federelement
- 7: Druckscheibe
- 8: Mitnehmer
- 9: Nut
- 9a: Nutanfang
- 10: Welle
- 11: Gehäuse
- 12: erster Bereich
- 13: zweiter Bereich
- 14: Stift
- 15: Gewindestift
- 16: erste Nebendichtung
- 17: zweite Nebendichtung
- 80: Mitnehmergehäuse
- 81: Innenflansch
- 81a: Auflagefläche am Innenflansch
- 81b: ringförmig ununterbrochener Bereich an der Auflagefläche
- 82: Nase zur Drehmomentübertragung
- 83: Fensteraussparung
- 84: Bund
- 85: Innenbereich
- 86: Eckbereich
- A: Abströmung
- E: Ebene
- X-X: Axialrichtung

## Patentansprüche

1. Vertikal angeordnete Gleitringdichtungsanordnung umfassend:
- eine Gleitringdichtung (2) mit einem rotierenden Gleitring (3) und einem stationären Gleitring (4), wobei der rotierende Gleitring (3) eine erste Gleitfläche (3a) aufweist und der stationäre Gleitring (4) eine zweite Gleitfläche (4a) aufweist, wobei zwischen den Gleitflächen (3a, 4a) ein Dichtspalt (5) definiert ist,
- einen Mitnehmer (8) eingerichtet zur Drehmomentübertragung von einem rotierenden Bauteil auf den rotierenden Gleitring (3),
- ein Federelement (6), welches in einer Axialrichtung (X-X) der Gleitringdichtung vollständig in einem Innenbereich (85) des Mitnehmers (8) zwischen dem Mitnehmer (8) und einer Rückseite (3b) des rotierenden Gleitrings (3) angeordnet ist,
- wobei der Mitnehmer (8) ein hohlzylindrisches Mitnehmergehäuse (80) mit einem nach innen gerichteten Innenflansch (81) aufweist, wobei der Innenflansch (81) zur Abstützung des Federelements (6) eingerichtet ist, und das Federelement (6) am Innenflansch (81) anliegt,
- **dadurch gekennzeichnet, dass** das Mitnehmergehäuse (80) wenigstens eine Fensteraussparung (83) aufweist, sodass ein sich in Umfangsrichtung erstreckender, bogenförmiger Bund (84) ausgebildet ist,
- wobei in dem Bund (84) wenigstens eine den Bund (84) durchbrechende Nut (9) ausgebildet ist, welche eine Nuttiefe aufweist, die bis zum Innenflansch (81) reicht, um einen Abströmpfad für Medium aus dem Innenbereich (85) des Mitnehmers (8) bereitzustellen.

2. Gleitringdichtungsanordnung nach Anspruch 1, wobei die Nut (9) in einem Eckbereich (86) zwischen dem Bund (84) und dem Mitnehmergehäuse (80) angeordnet ist.

3. Gleitringdichtungsanordnung nach Anspruch 2, wobei in jedem Eckbereich (86) der Fensteraussparung (83) am Bund (84) eine Nut (9) ausgebildet ist.

4. Gleitringdichtungsanordnung nach einem der vorhergehenden Ansprüche, wobei im Mitnehmergehäuse (80) zwei Fensteraussparungen (83) ausgebildet sind.

5. Gleitringdichtungsanordnung nach einem der vorhergehenden Ansprüche, wobei die Nut (9) derart ausgebildet ist, dass ein Nutanfang (9a) in einer Auflagefläche (81a) des Innenflansches (81) liegt.

6. Gleitringdichtungsanordnung nach Anspruch 5, wobei die Nut (9) in der Auflagefläche (81a) des Innenflansches (81) derart ausgebildet ist, dass an der Auflagefläche (81a) ein ringförmig durchgehender Bereich (81b) verbleibt.

7. Gleitringdichtungsanordnung nach einem der vorhergehenden Ansprüche, wobei die Nut (9) in einem spitzen Winkel zu einer Ebene (E), in welcher der Innenflansch (81) liegt, angeordnet ist.

8. Gleitringdichtungsanordnung nach einem der vorhergehenden Ansprüche, wobei die Nut (9) in einen U-förmigen Nutquerschnitt aufweist.

9. Gleitringdichtungsanordnung nach einem der vorhergehenden Ansprüche, wobei das Federelement (6) eine Einzelfeder, insbesondere ein ringförmiges Federelement und insbesondere eine Wellfeder oder Tellerfeder ist.

10. Rührwerksdichtung umfassend eine Gleitringdichtungsanordnung nach einem der vorhergehenden Ansprüche.

## Claims

1. A vertically arranged mechanical seal arrangement comprising:
- a mechanical seal (2) with a rotating slide ring (3) and a stationary slide ring (4), wherein the rotating slide ring (3) has a first slide surface (3a) and the stationary slide ring (4) has a second slide surface (4a), wherein a sealing gap (5) is defined between the slide surfaces (3a, 4a),
- a driver (8) configured to transmit torque from a rotating component to the rotating slide ring (3),
- a spring element (6) which is arranged in an axial direction (X-X) of the mechanical seal completely in an inner region (85) of the driver (8) between the driver (8) and a rear side (3b) of the rotating slide ring (3),
- wherein the driver (8) has a hollow-cylindrical driver housing (80) with an inwardly directed inner flange (81), wherein the inner flange (81) is configured to support the spring element (6), and the spring element (6) bears against the inner flange (81), **characterized in that**
- the driver housing (80) has at least one window recess (83), such that an arcuate collar (84) extending in the circumferential direction is formed,
- wherein at least one groove (9) which penetrates the collar (84) is formed in the collar (84) and has a groove depth which reaches as far as the inner flange (81) in order to provide an outflow path for medium from the inner region (85) of the driver (8).

2. Mechanical seal arrangement according to Claim 1, wherein the groove (9) is arranged in a corner region (86) between the collar (84) and the driver housing (80).

3. Mechanical seal arrangement according to Claim 2, wherein a groove (9) is formed on the collar (84) in each corner region (86) of the window recess (83).

4. Mechanical seal arrangement according to one of the preceding claims, wherein two window recesses (83) are formed in the driver housing (80).

5. Mechanical seal arrangement according to one of the preceding claims, wherein the groove (9) is formed in such a way that a groove start (9a) lies in a bearing surface (81a) of the inner flange (81).

6. Mechanical seal arrangement according to Claim 5, wherein the groove (9) is formed in the bearing surface (81a) of the inner flange (81) in such a way that an annularly continuous region (81b) remains on the bearing surface (81a).

7. Mechanical seal arrangement according to one of the preceding claims, wherein the groove (9) is arranged at an acute angle to a plane (E) in which the inner flange (81) lies.

8. Mechanical seal arrangement according to one of the preceding claims, wherein the groove (9) has a U-shaped groove cross section.

9. Mechanical seal arrangement according to one of the preceding claims, wherein the spring element (6) is an individual spring, in particular an annular spring element and in particular a corrugated spring or plate spring.

10. Agitator seal comprising a mechanical seal arrangement according to one of the preceding claims.

## Revendications

1. Ensemble à garniture mécanique disposé verticalement comprenant :
- une garniture mécanique (2) avec une bague de glissement rotative (3) et une bague de glissement stationnaire (4), dans lequel la bague de glissement rotative (3) présente une première surface de glissement (3a) et la bague de glissement stationnaire (4) présente une deuxième surface de glissement (4a), dans lequel une fente d'étanchéité (5) est définie entre les surfaces de glissement (3a, 4a),
- un entraîneur (8) mis au point pour transmettre un couple de rotation d'un composant rotatif à la bague de glissement rotative (3),
- un élément à ressort (6), qui est disposé, dans une direction axiale (X-X) de la garniture mécanique, entièrement dans une zone intérieure (85) de l'entraîneur (8) entre l'entraîneur (8) et une face arrière (3b) de la bague de glissement rotative (3),
- dans lequel l'entraîneur (8) présente un boîtier d'entraîneur cylindrique creux (80) avec une bride intérieure (81) dirigée vers l'intérieur, dans lequel la bride intérieure (81) est mise au point pour soutenir l'élément à ressort (6), et l'élément à ressort (6) repose sur la bride intérieure (81),
- **caractérisé en ce que** le boîtier d'entraîneur (80) présente au moins un évidement de fenêtre (83) si bien qu'un collet (84) en forme d'arc s'étendant dans la direction périphérique est réalisé,
- dans lequel au moins une rainure (9) traversant le collet (84) est réalisée dans le collet (84), laquelle présente une profondeur de rainure qui s'étend jusqu'à la bride intérieure (81) pour fournir un chemin d'écoulement de sortie pour le milieu provenant de la zone intérieure (85) de l'entraîneur (8).

2. Ensemble à garniture mécanique selon la revendication 1, dans lequel la rainure (9) est disposée dans une zone d'angle (86) entre le collet (84) et le boîtier d'entraîneur (80).

3. Ensemble à garniture mécanique selon la revendication 2, dans lequel une rainure (9) est réalisée dans chaque zone d'angle (86) de l'évidement de fenêtre (83) sur le collet (84).

4. Ensemble à garniture mécanique selon l'une quelconque des revendications précédentes, dans lequel deux évidements de fenêtre (83) sont réalisés dans le boîtier d'entraîneur (80).

5. Ensemble à garniture mécanique selon l'une quelconque des revendications précédentes, dans lequel la rainure (9) est réalisée de telle manière qu'un début de rainure (9a) se trouve dans une surface d'appui (81a) de la bride intérieure (81).

6. Ensemble à garniture mécanique selon la revendication 5, dans lequel la rainure (9) dans la surface d'appui (81a) de la bride intérieure (81) est réalisée de telle manière qu'une zone continue (81b) en forme d'anneau reste sur la surface d'appui (81a).

7. Ensemble à garniture mécanique selon l'une quelconque des revendications précédentes, dans lequel la rainure (9) est disposée à un angle aigu par rapport à un plan (E) dans lequel se trouve la bride intérieure (81).

8. Ensemble à garniture mécanique selon l'une quelconque des revendications précédentes, dans lequel la rainure (9) présente une section transversale de rainure en forme de U.

9. Ensemble à garniture mécanique selon l'une quelconque des revendications précédentes, dans lequel l'élément à ressort (6) est un ressort simple, en particulier un élément à ressort annulaire et en particulier un ressort ondulé ou un ressort à disque.

10. Joint d'étanchéité d'agitateur comprenant un ensemble à garniture mécanique selon l'une quelconque des revendications précédentes.
